# EUROPÄISCHE PATENTSCHRIFT

(11) **EP 3 268 654 B1**
(45) Veröffentlichungstag und Bekanntmachung des Hinweises auf die Patenterteilung: **15.04.2020**
(21) Anmeldenummer: 16706136.5
(22) Anmeldetag: 19.02.2016
(51) Int. Cl.: F16L 55/027, F16L 55/04, F16L 55/05, F15B 21/00

(54) **DÄMPFUNGSVORRICHTUNG**
DAMPING DEVICE
DISPOSITIF AMORTISSEUR

(30) Priorität: 10.03.2015 DE 102015003015; 10.03.2015 DE 102015003016
(43) Veröffentlichungstag der Anmeldung: 17.01.2018
(73) Patentinhaber: HYDAC TECHNOLOGY GMBH, 66280 Sulzbach/Saar (DE)
(72) Erfinder: BALTES, Herbert, 66679 Losheim (DE); KLOFT, Peter, 56235 Ransbach-Baumbach (DE); WAITSCHAT, Arne, 21129 Hamburg (DE); THIELECKE, Frank, 21614 Buxtehude (DE); BEHR, Robert Marinus, 28844 Weyhe (DE)
(74) Vertreter: Bartels und Partner, Patentanwälte
(86) Internationale Anmeldenummer: PCT/EP2016/000302
(87) Internationale Veröffentlichungsnummer: WO 2016/142033

(56) Entgegenhaltungen:
- WO-A1-2007/012537
- CN-U- 203 374 996
- DE-U1-202014 006 687
- US-A- 2 916 101

## Beschreibung

Die Erfindung betrifft eine Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit den Merkmalen im Oberbegriff von Anspruch 1.

Dämpfungsvorrichtungen dieser Art sind Stand der Technik. Solche Hydrodämpfer, auch Schalldämpfer oder Silencer genannt, dienen der Minderung von Schwingungen, die durch Druckpulsationen erzeugt sind, die einem betreffenden Hydrosystem periodisch aufgeprägt werden, insbesondere durch den Betrieb von Hydropumpen. Wie in dem Dokument DE 102 17 080 C1 aufgezeigt ist, weisen die bekannten Dämpfungsvorrichtungen dieser Gattung ein Dämpfungsgehäuse in Form eines Kreiszylinders auf, der an beiden axialen Endbereichen kugelförmig abgerundet ist, wobei sich Fluideinlass und Fluidauslass koaxial zur Zylinderachse an je einem Endbereich befinden. Als Dämpfungsraum, der den Fluidstrom von Fluideinlass zu Fluidauslass durchquert, ist bei diesen Dämpfungsvorrichtungen ein Dämpfungsrohr vorgesehen, das sich zwischen Fluideinlass und Fluidauslass koaxial erstreckt und in der Rohrwand Öffnungen zum das Rohr umgebenden Fluidraum aufweist. Entsprechend dem Zylinderdurchmesser ist der Fluidraum gegenüber der durch das Dämpfungsrohr vorgegebenen axialen Durchströmungsrichtung radial erweitert.

Die DE 20 2014 006 687 U1 der Schutzrechtsinhaberin beschreibt eine Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem einen Dämpfungsraum umgebenden Dämpfungsgehäuse, das mindestens einen Fluideinlass und mindestens einen Fluidauslass sowie einen zwischen Fluideinlass und Fluidauslass sich erstreckenden Fluidaufnahmeraum aufweist, wobei im Betrieb der Vorrichtung ein Fluidstrom in einer Durchströmungsrichtung vom Fluideinlass kommend in Richtung des Fluidauslasses den Dämpfungsraum durchquert, wobei sich zumindest Teile des Fluidaufnahmeraums in mindestens einer Ausdehnungsrichtung quer zur Durchströmungsrichtung erstrecken, wobei der Fluidaufnahmeraum unmittelbar an den Fluideinlass und an den Fluidauslass angrenzt, und wobei das Dämpfungsgehäuse mehrteilig ausgebildet ist, mit einem topfartigen Bodenteil, das eine Teil des Hohlraumes bildende scheibenartige Mittenausnehmung mit der einen Begrenzungswand sowie den Fluideinlass und Fluidauslass aufnimmt; und mit einem flanschartig ausgebildeten Deckelteil, das mit der anderen Begrenzungswand als Teil eines Eingriffsstutzens bei am Bodenteil festgelegtem Deckelteil in die Mittenausnehmung bündig eingreift.

Weitere Dämpfungsvorrichtungen gehen aus der US 2 916 101, der CN 203374996 U und der WO 2007/012537 A1 hervor.

Ausgehend von diesem Stand der Technik stellt sich die Erfindung die Aufgabe, eine Dämpfungsvorrichtung der betrachteten Art zur Verfügung zu stellen, die bei einfacher Bauweise sich durch ein vorteilhaftes Betriebsverhalten auszeichnet.

Erfindungsgemäß ist diese Aufgabe durch eine Dämpfungsvorrichtung gelöst, die die Merkmale des Patentanspruchs 1 in seiner Gesamtheit aufweist. Gemäß dem kennzeichnenden Teil des Anspruches 1 besteht eine wesentliche Besonderheit der Erfindung darin, dass im Dämpfungsraum ein vom Fluidstrom anströmbares und dessen Strömungsgeschwindigkeit bereichsweise veränderndes Leitelement vorgesehen ist und dass das Leitelement mit dem Deckelteil einstückig ausgebildet ist und aus der am Eingriffsstutzen gebildeten Begrenzungswand vorspringt. Durch die direkte Anbindung des Fluidaufnahmeraumes an Fluideinlass und Fluidauslass und den dadurch bedingten Wegfall eines Dämpfungsrohres zeichnet sich die erfindungsgemäße Vorrichtung zum einen durch eine vereinfachte Bauweise aus. Bei Dämpfungsvorrichtungen der vorliegenden Gattung mit einem sich quer zur Durchströmungsrichtung erstreckenden Fluidaufnahmeraum, den sogenannten Disc-Silencern, hat der Verlauf der Strömungsgeschwindigkeit innerhalb des Fluidaufnahmeraumes einen starken Einfluss auf das Dämpfungsverhalten. Mittels des erfindungsgemäß vorgesehenen, anströmbaren Leitelementes eröffnet sich die Möglichkeit, die Strömung partiell zu beschleunigen, so dass im Unterschied zu einer freien Durchströmung von Fluideinlass zu Fluidauslass auch in den seitlichen Bereichen des Fluidaufnahmeraums eine für die Dämpfungseffizienz günstige Strömungsgeschwindigkeit erreichbar ist. Als Leitelement dienende Einbauteile können alle beliebigen geometrischen Formen annehmen, die ohne übermäßige Erhöhung des Strömungswiderstandes eine partielle Beschleunigung der Strömung bewirken.

Bei besonders vorteilhaften Ausführungsbeispielen ist der Fluidaufnahmeraum durch einen Hohlraum in Form einer Scheibe mit zwei parallel zueinander verlaufenden, die Dicke der Scheibe bestimmenden Begrenzungswänden gebildet, wobei das Leitelement sich von einer Begrenzungswand zur anderen Begrenzungswand durchgehend erstreckt. Dabei kann der scheibenartige Hohlraum mit Vorteil zylindrisch oder als Vieleck ausgebildet sein oder jede andere von der Kreisform abweichende Gestalt besitzen.

Die Anordnung kann hierbei mit besonderem Vorteil so getroffen sein, dass Teile des Fluideinlass und des Fluidauslasses fluchtend zu den Begrenzungswänden im Dämpfungsgehäuse verlaufen. Bei einer derartigen Anordnung kann der Durchmesser von als Dämpfungsgehäuse-Bohrungen ausgebildetem Fluideinlass und Fluidauslass gleich groß sein und dem Abstand zwischen den beiden Begrenzungswänden entsprechen.

Mit besonderem Vorteil kann das Leitelement in auf die von Fluideinlass zu Fluidauslass verlaufende Gehäuseachse ausgerichteter Lage angeordnet sein, wobei das Leitelement vorzugsweise zumindest näherungsweise im Bereich der halben Länge der von Fluideinlass zu Fluidauslass verlaufenden Gehäuseachse angeordnet ist.

Bei besonders vorteilhaften Ausführungsbeispielen ist das Leitelement in der Art eines Stromteilers mit Leitflächen ausgebildet, die sich von einem dem Fluideinlass zugewandten, auf der Gehäuseachse befindlichen schmalen Anströmbereich zu beiden Seiten hin erstrecken. Dadurch lassen sich auch in den von der Längsachse entfernten Außenbereichen des scheibenartigen Hohlraumes für die Dämpfungswirkung günstige Strömungsgeschwindigkeiten realisieren.

Für die Abdichtung des Hohlraums gegenüber der Umgebung kann am Eingriffsstutzen des Deckelteils eine Dichteinrichtung, insbesondere in Form eines in einer umlaufenden Nut eingesetzten Dichtringes, angeordnet sein, der eine Abdichtung an der Mittenausnehmung des topfartigen Bodenteils bildet.

Für eine druckfeste Ausbildung des Dämpfungsgehäuses kann das Deckelteil, diametral zu seiner Hochachse gegenüberliegend, mehrere Durchgriffsbohrungen aufweisen, die von Festlegeschrauben durchgriffen das Deckelteil am Bodenteil festlegen. Hierbei kann die Anordnung mit Vorteil so getroffen sein, dass die Festlegeschrauben unter Freilassen des Bereichs von Fluideinlass und Fluidauslass gleichmäßig entlang eines Außenumfangs am Dämpfungsgehäuse angeordnet sind, der den scheibenartigen Fluidaufnahmeraum umfasst. Das Dämpfungsgehäuse lässt sich so für einen sicheren Betrieb bei hohem Druckniveau, beispielsweise im Bereich von 200 bar, auslegen.

Für die Verbindung mit einem betreffenden Hydrosystem kann am Fluideinlass und/oder am Fluidauslass im Dämpfungsgehäuse eine Aufnahme für einen Dichtring vorgesehen sein, der den Fluideinlass und/oder Fluidauslass umfasst. An Drittbauteilen lässt sich das Dämpfungsgehäuse in der Art eines Festlegeblocks mittels mehrerer Festlegebolzen, die den Bereich des Fluideinlass und/oder Fluidauslasses umgeben, festlegen.

Nachstehend ist die Erfindung anhand eines in der Zeichnung dargestellten Ausführungsbeispiels im Einzelnen erläutert. Es zeigen:
- Fig. 1: eine vereinfachte skizzenhafte Darstellung des hauptsächlichen Verlaufs der Fluidströmung im Fluidaufnahmeraum einer Dämpfungsvorrichtung in Form eines Disc-Silencers;
- Fig. 2: eine der Fig. 1 entsprechende Darstellung bei einer erfindungsgemäßen Dämpfungsvorrichtung;
- Fig. 3: eine gegenüber einer praktischen Ausführungsform etwa in halber Größe gezeichnete perspektivische Schrägeinsicht eines Ausführungsbeispiels der erfindungsgemäßen Dämpfungsvorrichtung;
- Fig. 4: eine Draufsicht des Ausführungsbeispieles der Dämpfungsvorrichtung;
- Fig. 5: einen Längsschnitt des Ausführungsbeispieles entsprechend der Schnittlinie V-V von Fig. 4;
- Fig. 6: eine Teilansicht lediglich des den Fluidauslass aufweisenden Anschlussbereichs des Dämpfungsgehäuses des Ausführungsbeispiels;
- Fig. 7: eine der Fig. 6 entsprechende Teilansicht des den Fluideinlass aufweisenden Anschlussbereichs;
- Fig. 8: eine Seitenansicht des Deckelteiles des Dämpfungsgehäuses des Ausführungsbeispieles;
- Fig. 9: eine Draufsicht des Deckelteiles;
- Fig. 10: eine Schnittdarstellung des Deckelteiles entsprechend der Schnittlinie X-X von Fig. 9; und
- Fig. 11: eine perspektivische Schrägansicht des Deckelteiles, gesehen auf dessen Unterseite.

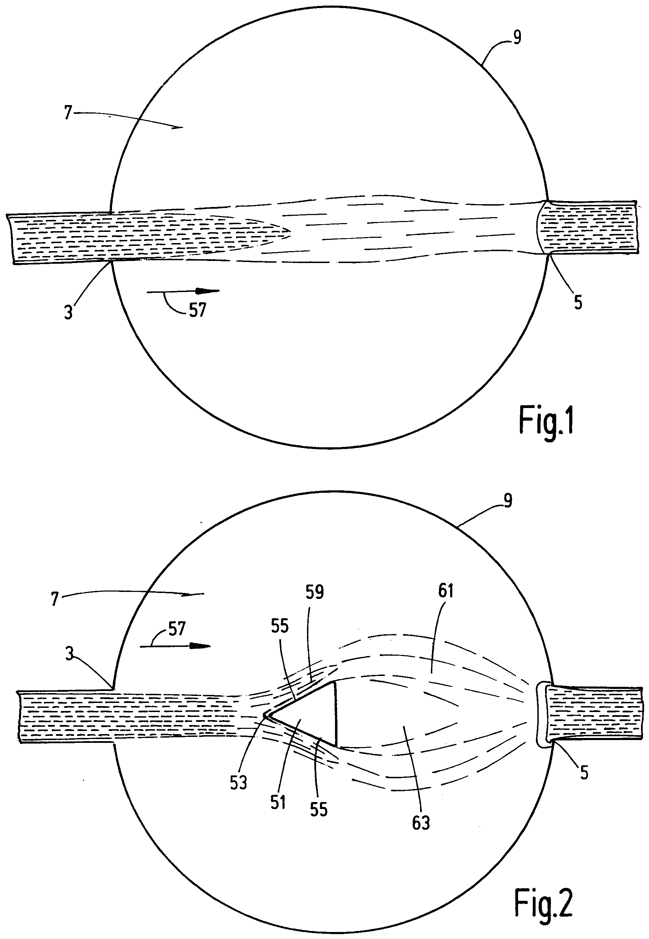

Unter Bezugnahme auf die beigefügten Zeichnungen ist die Erfindung am Beispiel eines sogenannten Disc-Silencers näher beschrieben, der in seinem grundsätzlichen Aufbau einem nachveröffentlichten Stand der Technik entspricht, wie er in der Patentanmeldung DE 10 2014 005 822.0 beschrieben ist. Ein derartiger Silencer weist innerhalb seines Dämpfungsgehäuses, das bis auf einen Fluideinlass 3 und einen Fluidauslass 5 gegenüber der Umgebung dicht abgeschlossen ist, als Dämpfungsraum einen an Fluideinlass 3 und -auslass 5 unmittelbar angrenzenden Fluidaufnahmeraum auf, der durch einen Hohlraum 7 in Form einer flachen kreisrunden Scheibe gebildet ist, von der in den vereinfachten, skizzenhaften Darstellungen von Figuren 1 und 2 lediglich der kreisrunde Umriss gezeigt und mit 9 bezeichnet ist. Wie ersichtlich, sind Fluideinlass 3 und Fluidauslass 5 einander diametral gegenüberliegend, wobei die zwischen Fluideinlass 3 und Fluidauslass 5 verlaufende Gehäuseachse 11 der Durchströmungsrichtung des Fluidstromes entspricht.

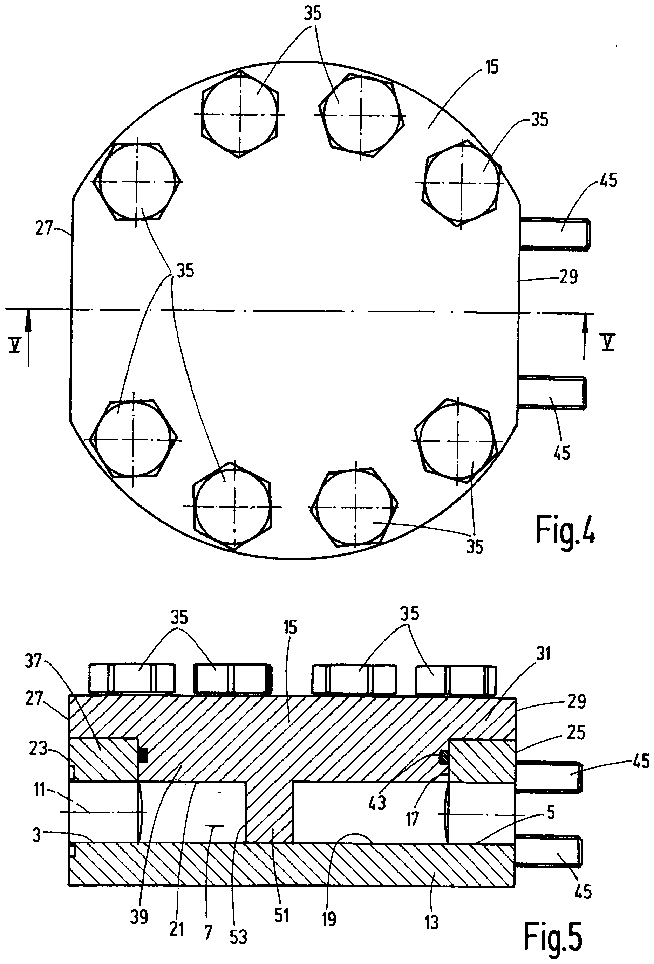

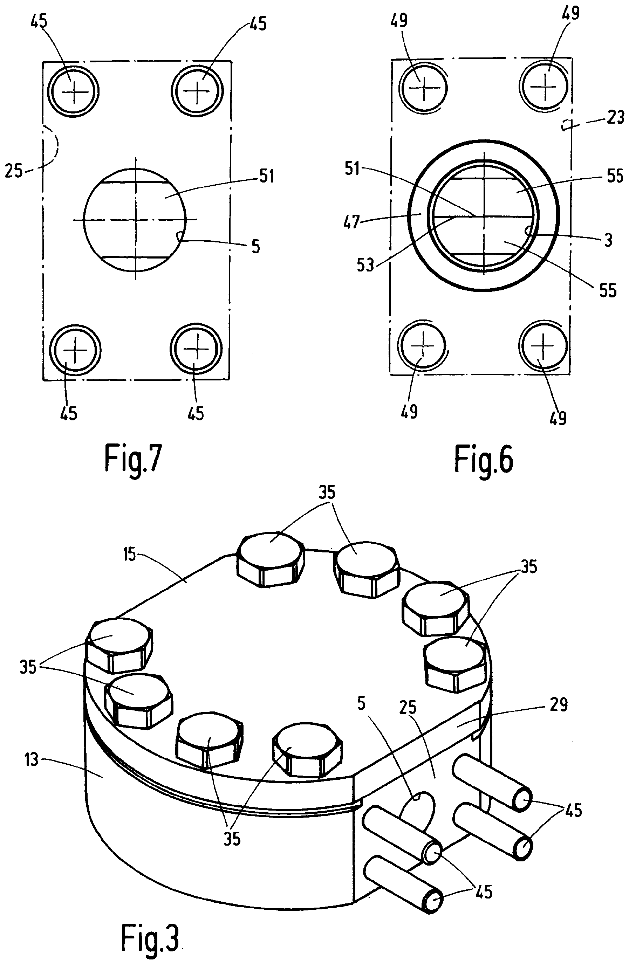

Wie den Figuren 3 und 5 am deutlichsten entnehmbar ist, ist das Dämpfungsgehäuse aus zwei Hauptteilen gebildet, nämlich einem Bodenteil 13 und einem Deckelteil 15. Zur Bildung des scheibenförmigen Hohlraumes 7 weist das Bodenteil 13 eine Mittenausnehmung 17 in Form eines Topfes auf, dessen ebene Bodenfläche die untere Begrenzungswand 19 des scheibenartigen Hohlraumes 7 bildet. Die die Dicke der Scheibe bestimmende obere Begrenzungswand 21, die in paralleler Ebene zur unteren Begrenzungswand 19 verläuft, befindet sich an der Unterseite des Deckelteiles 15. Fluideinlass 3 und Fluidauslass 5 sind mit den Begrenzungswänden 19 und 21 fluchtend, so dass der Durchmesser von Einlass 3 und Auslass 5 jeweils der Scheibendicke des Hohlraumes 7 entspricht. Am Fluideinlass 3 sowie am Fluidauslass 5 weist das Bodenteil 13 jeweils eine Abflachung 23 bzw. 25 auf, zwischen denen die Außenwand des Bodenteiles 13 kreisbogenförmig verläuft. Das Deckelteil 15 ist in seinem Außenumfang gleich geformt wie das Bodenteil 13 und weist wie dieses gegenüberliegende Abflachungen 27 und 29 auf, zwischen denen der Außenumfang ebenfalls kreisbogenförmig verläuft. Bei am Bodenteil 13 angebrachtem Deckelteil 15 ist daher, wie Fig. 3 zeigt, eine absatzlose Außenkontur des Dämpfungsgehäuses gebildet.

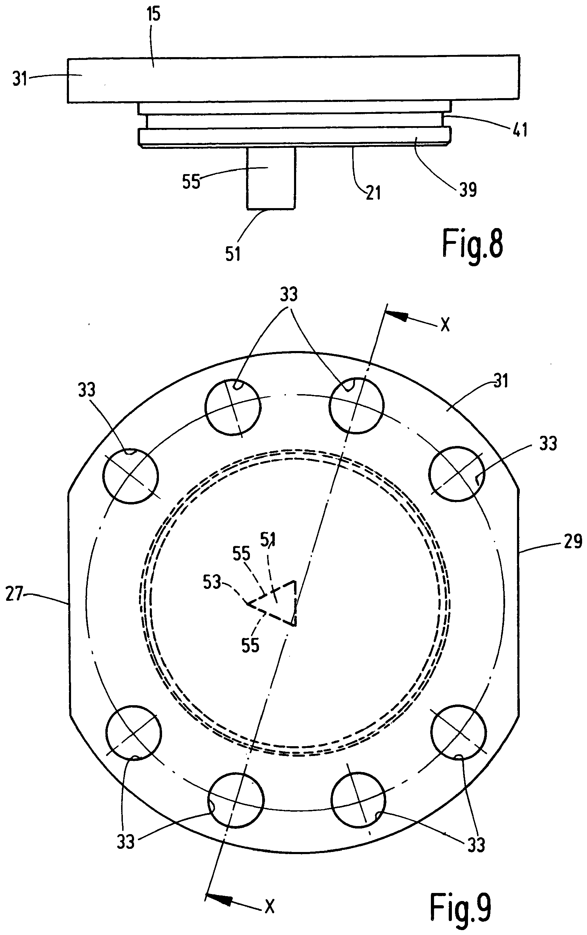

Wie die Fig. 5 sowie 8 und 9 zeigen, weist das Deckelteil 15 ein Flanschteil 31 mit Befestigungslöchern 33 auf. Diese sind, wie Fig. 9 zeigt, auf einem Teilkreisbogen außerhalb des Bereichs der Abflachungen 27 und 29 angeordnet. In Entsprechung zu den Befestigungslöchern 33 sind im Bodenteil 13 Gewindebohrungen als Sacklöcher für Befestigungsschrauben 35 vorgesehen, mittels denen das Deckelteil 15 am Bodenteil 13 derart festlegbar ist, dass das Flanschteil 31 des Deckelteiles 15 den Umfangsrand 37 der Mittenausnehmung 17 des Bodenteils 13 übergreift. Dabei greift ein sich von dem Flanschteil 31 nach unten erstreckender kreisrunder Eingriffsstutzen 39 passend in die Mittenausnehmung 17 des Bodenteiles 13 ein. Dieser Eingriff bei verschraubtem Zustand ist in Fig. 5 gezeigt. Für die Abdichtung des Hohlraums 7 gegenüber dem Deckelteil 15 ist in einer in die Seitenwand des Eingriffsstutzens 39 eingearbeitete Ringnut 41 ein Dichtring 43 eingesetzt.

Für die Anbringung des Dämpfungsgehäuses an betreffenden Drittbauteilen sind beim gezeigten Ausführungsbeispiel an der dem Fluidauslass 5 aufweisenden Abflachung 25 des Bodenteils 13 symmetrisch zum Fluidauslass 5 angeordnete Gewindebolzen 45 vorgesehen. Ferner ist an der gegenüberliegenden Abflachung 23 am Fluideinlass 3 eine Aufnahmenut 47 für einen Dichtring ausgebildet. Außerdem sind an dieser Abflachung 23 für die Bildung von Anschlussverbindungen Befestigungsbohrungen 49 in symmetrischer Anordnung zum Fluideinlass 3 angeordnet. Es versteht sich, dass in entsprechender Weise an der dem Fluidauslass 5 zugeordneten Abflachung 25 eine Dichtungsanordnung vorgesehen sein kann. Aufgrund der symmetrischen Gehäusebauform lassen sich Einlassseite und Auslassseite, gegebenenfalls mit geänderten Dichtgeometrien, auch gegeneinander tauschen.

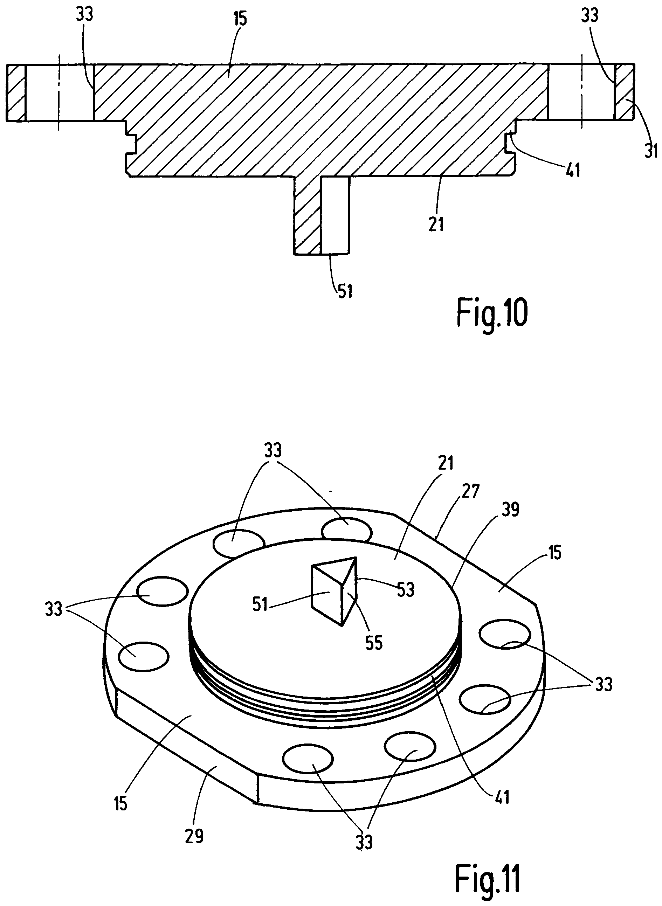

Soweit es vorstehend beschrieben ist, entspricht das Ausführungsbeispiel der Dämpfungsvorrichtung dem Disc-Silencer, wie er als nachveröffentlichter Stand der Technik in der erwähnten Patentanmeldung DE 10 2014 005 822.0 aufgezeigt ist. Der wesentliche Unterschied der vorliegenden Erfindung demgegenüber besteht darin, dass in dem den Fluidaufnahmeraum bildenden, scheibenförmigen Hohlraum 7 ein Strömungs-Leitelement 51 angeordnet ist. Dieses weist, wie am deutlichsten den Figuren 2, 9 und 11 entnehmbar ist, eine Keilform dergestalt auf, dass von einem schmalen, eine Art Keilspitze bildenden Anströmbereich 53 ausgehend Leitflächen 55 gebildet sind, die in der mit Pfeil 57 angegebenem Durchströmungsrichtung divergieren. Das Leitelement 51 bildet so eine Art Stromteiler für einen Strömungsverlauf, wie er in Fig. 2 schematisch vereinfacht angedeutet ist, mit seitlichen Zonen 59, in denen die Strömung partiell beschleunigt ist, und Zonen 61 und 63 mit demgegenüber geringerer Strömungsgeschwindigkeit.

Das Leitelement 51 ist mit dem Deckelteil 15 einstückig als Vorsprung ausgebildet, der aus der Begrenzungswand 21 am Eingriffstutzen 39 auskragt. Dabei entspricht die Höhe des Vorsprungs der Scheibendicke des scheibenförmigen Hohlraumes 7, so dass sich das Leitelement 51 von der Begrenzungswand 21 des Deckelteiles 15 durchgehend bis zur Begrenzungswand 19 am Bodenteil 13 erstreckt. Das Leitelement 51 ist im Hohlraum 7 zentral angeordnet, so dass sich der spitze Anströmbereich 53 auf der von Fluideinlass 3 zu Fluidauslass 5 verlaufenden Gehäuseachse 11 in etwa auf deren halber Länge zwischen Einlass 3 und Auslass 5 befindet. Anstelle der beim vorliegenden Beispiel gezeigten Keilform kann eine andere Formgebung für das Leitelement 51 vorgesehen sein, bei der die Leitflächen, ohne ungünstigen Einfluss auf den Strömungswiderstand ein für eine hohe Effizienz der Dämpfung geeignetes Strömungsprofil im scheibenförmigen Hohlraum 7 erzeugen.

Es versteht sich, dass anstelle der gezeigten einstückigen Ausbildung des Leitelements 51 als Vorsprung an der Begrenzungswand 21 des Deckelteiles 15 als Leitelement ein separates Einbauteil vorgesehen sein kann. Ferner könnten mehr als ein Leitelement vorhanden sein, die gegebenenfalls unterschiedliche Form und Größe haben können. Auch ist die gezeigte Lageanordnung des Leitelements 51 auf der Gehäuseachse 11 nicht zwingend.

## Patentansprüche

1. Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem einen Dämpfungsraum umgebenden Dämpfungsgehäuse, das mindestens einen Fluideinlass (3) und mindestens einen Fluidauslass (5) sowie einen zwischen Fluideinlass und Fluidauslass sich erstreckenden Fluidaufnahmeraum (7) aufweist, wobei im Betrieb der Vorrichtung ein Fluidstrom in einer Durchströmungsrichtung (11) vom Fluideinlass (3) kommend in Richtung des Fluidauslasses (5) den Dämpfungsraum durchquert, wobei sich zumindest Teile des Fluidaufnahmeraums (7) in mindestens einer Ausdehnungsrichtung quer zur Durchströmungsrichtung (11) erstrecken, wobei der Fluidaufnahmeraum (7) unmittelbar an den Fluideinlass (3) und an den Fluidauslass (5) angrenzt, und wobei das Dämpfungsgehäuse mehrteilig ausgebildet ist,
- mit einem topfartigen Bodenteil (13), das eine Teil des Hohlraumes (7) bildende scheibenartige Mittenausnehmung (17) mit der einen Begrenzungswand (19) sowie den Fluideinlass (3) und Fluidauslass (5) aufnimmt; und
- mit einem flanschartig ausgebildeten Deckelteil (15), das mit der anderen Begrenzungswand (21) als Teil eines Eingriffsstutzens (39) bei am Bodenteil (13) festgelegtem Deckelteil (15) in die Mittenausnehmung (17) bündig eingreift,
**dadurch gekennzeichnet, dass** im Dämpfungsraum ein vom Fluidstrom anströmbares und dessen Strömungsgeschwindigkeit bereichsweise veränderndes Leitelement (51) vorgesehen ist und dass das Leitelement (51) mit dem Deckelteil (15) einstückig ausgebildet ist und aus der am Eingriffsstutzen (39) gebildeten Begrenzungswand (21) vorspringt.

2. Dämpfungsvorrichtung nach Anspruch 1, **dadurch gekennzeichnet, dass** der Fluidaufnahmeraum durch einen Hohlraum (7) in Form einer Scheibe mit zwei parallel zueinander verlaufenden, die Dicke der Scheibe bestimmenden Begrenzungswänden (19, 21) gebildet ist und dass das Leitelement (51) sich von einer Begrenzungswand (21) zur anderen Begrenzungswand (19) durchgehend erstreckt.

3. Dämpfungsvorrichtung nach Anspruch 2, **dadurch gekennzeichnet, dass** der scheibenartige Hohlraum (7) zylindrisch oder als Vieleck ausgebildet ist.

4. Dämpfungsvorrichtung nach einem der vorstehenden Ansprüche, **dadurch gekennzeichnet, dass** Teile des Fluideinlass (3) und des Fluidauslasses (5) fluchtend zu den Begrenzungswänden (19, 21) im Dämpfungsgehäuse verlaufen.

5. Dämpfungsvorrichtung nach einem der vorstehenden Ansprüche, **dadurch gekennzeichnet, dass** das Leitelement (51) in auf die von Fluideinlass (3) zu Fluidauslass (5) verlaufende Gehäuseachse (11) ausgerichteter Lage angeordnet ist.

6. Dämpfungsvorrichtung nach einem der vorstehenden Ansprüche, **dadurch gekennzeichnet, dass** das Leitelement (51) zumindest näherungsweise im Bereich der halben Länge der von Fluideinlass (3) zu Fluidauslass (5) verlaufenden Gehäuseachse (11) angeordnet ist.

7. Dämpfungsvorrichtung nach einem der vorstehenden Ansprüche, **dadurch gekennzeichnet, dass** das Leitelement (51) in der Art eines Stromteilers mit Leitflächen (55) ausgebildet ist, die sich von einem dem Fluideinlass (3) zugewandten, auf der Gehäuseachse (11) befindlichen schmalen Anströmbereich (53) zu beiden Seiten hin erstrecken.

8. Dämpfungsvorrichtung nach einem der vorstehenden Ansprüche, **dadurch gekennzeichnet, dass** der Durchmesser von als Dämpfungsgehäuse-Bohrungen ausgebildetem Fluideinlass (3) und Fluidauslass (5) gleich groß ist und dem Abstand zwischen den beiden Begrenzungswänden (19, 21) entspricht.

9. Dämpfungsvorrichtung nach einem der vorstehenden Ansprüche, **dadurch gekennzeichnet, dass** am Eingriffsstutzen (39) des Deckelteils (15) eine Dichteinrichtung, insbesondere in Form eines in einer umlaufenden Nut (41) eingesetzten Dichtringes (43), angeordnet ist, der den Hohlraum (7) als Bestandteil der Mittenausnehmung (17) gegenüber der Umgebung abdichtet.

10. Dämpfungsvorrichtung nach einem der vorstehenden Ansprüche, **dadurch gekennzeichnet, dass** das Deckelteil (15) diametral zu seiner Hochachse gegenüberliegend, mehrere Durchgriffsbohrungen (33) aufweist, die von Festlegeschrauben (35) durchgriffen das Deckelteil (15) am Bodenteil (13) festlegen.

11. Dämpfungsvorrichtung nach Anspruch 10, **dadurch gekennzeichnet, dass** die Festlegeschrauben (35) unter Freilassen des Bereichs von Fluideinlass (3) und Fluidauslass (5) gleichmäßig entlang eines Außenumfangs am Dämpfungsgehäuse verteilt angeordnet sind, der den scheibenartigen Fluidaufnahmeraum (7) umfasst.

12. Dämpfungsvorrichtung nach einem der vorstehenden Ansprüche, **dadurch gekennzeichnet, dass** am Fluideinlass (3) und/oder am Fluidauslass (5) im Dämpfungsgehäuse eine Aufnahme (47) für einen Dichtring vorgesehen ist, der den Fluideinlass (3) und/oder Fluidauslass (5) umfasst.

13. Dämpfungsvorrichtung nach einem der vorstehenden Ansprüche, **dadurch gekennzeichnet, dass** in der Art eines Festlegeblocks mit mehreren Festlegebolzen (45), die den Bereich des Fluideinlass (3) und/oder Fluidauslasses (5) umgeben, sich das Dämpfungsgehäuse an Drittbauteilen festlegen lässt.

## Claims

1. Damping device, especially for damping or avoiding pressure surges, such as pulsing, in hydraulic supply systems, preferably in the form of a silencer, with a damping housing surrounding a damping chamber, said damping housing comprising at least one fluid inlet (3) and at least one fluid outlet (5) and a fluid holding chamber (7) extending between fluid inlet and fluid outlet, wherein a fluid flow passes through the damping chamber when the device is in operation in a flow direction (11) coming from the fluid inlet (3) towards the fluid outlet (5), wherein at least portions of the fluid holding chamber (7) extend in at least one expansion direction transversely with respect to the flow direction (11), the fluid holding chamber (7) being directly adjacent to the fluid inlet (3) and the fluid outlet (5), and the damping housing being designed in multiple parts,
- with a pot-shaped base part (13), which incorporates a disc-shaped central recess (17) forming part of the cavity (7) with the one limiting wall (19) and the fluid inlet (3) and fluid outlet (5); and
- with a flange-shaped lid part (15), which engages flush in the central recess (17) with the other limiting wall (21) as part of an engagement piece (39) with the lid part (15) fixed to the base part (13),
**characterised in that** a guide element (51) through which the fluid flow can flow and with a flow speed that varies in certain regions is provided in the damping chamber and **in that** the guide element (51) is integrally formed with the lid part (15) and protrudes from the limiting wall (21) formed on the engagement piece (39).

2. Damping device according to claim 1, **characterised in that** the fluid holding chamber is formed by a cavity (7) in the form of a disc with two limiting walls (19, 21) running in parallel to each other and determining the thickness of the disc, and **in that** the guide element (51) extends continuously from one limiting wall (21) to the other limiting wall (19).

3. Damping device according to claim 2, **characterised in that** the disc-shaped cavity (7) is designed as a cylinder or polygon.

4. Damping device according to any one of the preceding claims, **characterised in that** portions of the fluid inlet (3) and the fluid outlet (5) run in alignment with the limiting walls (19, 21) in the damping housing.

5. Damping device according to any one of the preceding claims, **characterised in that** the guide element (51) is arranged in a position aligned on the housing axis running from the fluid inlet (3) to the fluid outlet (5).

6. Damping device according to any one of the preceding claims, **characterised in that** the guide element (51) is at least approximately arranged in the region of the half length of the housing axis (11) running from the fluid inlet (3) to the fluid outlet (5).

7. Damping device according to any one of the preceding claims, **characterised in that** the guide element (51) is designed in the form of a flow divider with guide surfaces (55) which extend from a narrow incoming flow region (53) facing the fluid inlet (3) on the housing axis (11) towards both sides.

8. Damping device according to any one of the preceding claims, **characterised in that** the diameter of the fluid inlet (3) and fluid outlet (5) designed as holes in the damping housing is identical and corresponds to the distance between the two limiting walls (19, 21).

9. Damping device according to any one of the preceding claims, **characterised in that** a sealing device, especially in the form of a sealing ring (43) inserted in a peripheral groove (41), is arranged on the engagement piece (39) of the lid part (15), said sealing ring sealing the cavity (7) as part of the central recess (17) from the environment.

10. Damping device according to any one of the preceding claims, **characterised in that** the lid part (15) comprises a plurality of through holes (33) diametrically opposite its vertical axis, which fix the lid part (15) to the base part (13) when fixing bolts (35) are passed through.

11. Damping device according to claim 10, **characterised in that** the fixing bolts (35) are arranged distributed evenly along an outer circumference of the damping housing, leaving the region of the fluid inlet (3) and the fluid outlet (5) free, said outer circumference surrounding the disc-shaped fluid holding chamber (7).

12. Damping device according to any one of the preceding claims, **characterised in that** a holder (47) for a sealing ring is provided on the fluid inlet (3) and/or on the fluid outlet (5) in the damping housing, said sealing ring surrounding the fluid inlet (3) and/or fluid outlet (5).

13. Damping device according to any one of the preceding claims, **characterised in that** the damping housing can be fixed to third-party components in the form of a fixing block with a plurality of fixing bolts (45), which surround the region of the fluid inlet (3) and/or fluid outlet (5).

## Revendications

1. Dispositif d'amortissement, notamment pour amortir ou empêcher des coups de bélier, comme des pulsations, dans des circuits hydrauliques d'alimentation, de préférence sous la forme d'un silencieux, comprenant une enveloppe d'amortissement, qui entoure un espace d'amortissement et qui a au moins une entrée (3) de fluide et au moins une sortie (5) de fluide, ainsi qu'un espace (7) de réception de fluide, s'étendant entre l'entrée de fluide et la sortie de fluide, dans lequel, lorsque le dispositif est en fonctionnement, un courant de fluide, dans un sens (11) de passage venant de l'entrée (3) de fluide en direction de la sortie (5) de fluide, traverse l'espace d'amortissement au moins des parties de l'espace (7) de réception de fluide s'étendant dans au moins une direction d'étendue transversalement au sens (11) de passage, l'espace (7) de réception de fluide étant directement voisin de l'entrée (3) de fluide et de la sortie (5) de fluide et l'enveloppe d'amortissement étant constituée en plusieurs parties,
- ayant une partie (13) de fond de type en pot, qui reçoit un évidement (17) médian, en forme de disque formant une partie de la cavité (7), avec la une paroi (19) de démarcation, ainsi que l'entrée (3) de fluide et la sortie (5) de fluide ; et
- ayant une partie (15) de couvercle, constituée en étant de type à bride, qui, par l'autre paroi (21) de démarcation, comme partie d'une tubulure (39) de pénétration, pénètre à affleurement dans l'évidement (7) médian, lorsque la partie (15) de couvercle est fixée à la partie (13) de fond,
**caractérisé en ce que**, dans l'espace d'amortissement est prévu un élément (51) de guidage, sur lequel peut affluer du courant de fluide et modifiant par endroit sa vitesse d'écoulement, et **en ce que** l'élément (51) de guidage est constitué d'une seule pièce avec la partie (15) de couvercle et fait saillie de la paroi (21) de démarcation formée à la tubulure (39) de pénétration.

2. Dispositif d'amortissement suivant la revendication 1, **caractérisé en ce que** l'espace de réception de fluide est formé d'une cavité (7) en forme d'un disque ayant deux parois (19, 21) de démarcation, s'étendant parallèlement entre elles et déterminant l'épaisseur du disque, et **en ce que** l'élément (51) de guidage s'étend de manière continue d'une paroi (21) de démarcation à l'autre paroi (19) de démarcation.

3. Dispositif d'amortissement suivant la revendication 2, **caractérisé en ce que** la cavité (7) de type en disque est cylindrique ou polygonale.

4. Dispositif d'amortissement suivant l'une des revendications précédentes, **caractérisé en ce que** des parties de l'entrée (3) de fluide et de la sortie (5) de fluide s'étendent à affleurement avec les parois (19, 21) de démarcation dans l'enveloppe d'amortissement.

5. Dispositif d'amortissement suivant l'une des revendications précédentes, **caractérisé en ce que** l'élément (51) de guidage est disposé dans une position dirigée sur l'axe (11) de l'enveloppe, s'étendant de l'entrée (15) de fluide à la sortie (5) de fluide.

6. Dispositif d'amortissement suivant l'une des revendications précédentes, **caractérisé en ce que** l'élément (51) de guidage est disposé, au moins à peu près, dans la partie à mi-longueur de l'axe (11) de l'enveloppe, s'étendant de l'entrée (3) de fluide à la sortie (5) de fluide.

7. Dispositif d'amortissement suivant l'une des revendications précédentes, **caractérisé en ce que** l'élément (51) de guidage est constitué à la manière d'un diviseur de courant ayant des surfaces (55) de guidage, qui vont d'une région (53) d'afflux étroite, tournée vers l'entrée (3) de fluide et se trouvant sur l'axe (11) de l'enveloppe, vers les deux côtés.

8. Dispositif d'amortissement suivant l'une des revendications précédentes, **caractérisé en ce que** les diamètres de l'entrée (3) de fluide et de la sortie (5) de fluide, constituées sous la forme de trous de l'enveloppe d'amortissement, sont de même dimension et correspondent à la distance entre les deux parois (19, 21) de démarcation.

9. Dispositif d'amortissement suivant l'une des revendications précédentes, **caractérisé en ce que**, à la tubulure (39) de pénétration de la partie (15) de couvercle, est disposé un dispositif d'étanchéité, notamment sous la forme d'un joint (43) torique inséré dans une rainure (41) faisant le tour, qui rend étanche, vis-à-vis de l'atmosphère ambiante, la cavité (7) en tant que partie constitutive de l'évidement (17) médian.

10. Dispositif d'amortissement suivant l'une des revendications précédentes, **caractérisé en ce que** la partie (15) de couvercle a plusieurs trous (33) de passage, opposés diamétralement par rapport à son axe verticale, qui, traversés par des vis (35) de fixation, fixent la partie (15) de couvercle à la partie (13) de fond.

11. Dispositif d'amortissement suivant la revendication 10, **caractérisé en ce que** les vis (35) de fixation sont réparties en laissant libre la région de l'entrée (3) de fluide et de la sortie (5) de fluide uniformément suivant un pourtour extérieur de l'enveloppe d'amortissement, qui entoure l'espace (7) de réception de fluide en forme de disque

12. Dispositif d'amortissement suivant l'une des revendications précédentes, **caractérisé en ce qu'**à l'entrée (3) de fluide et/ou à la sortie (5) de fluide dans l'enveloppe d'amortissement, est prévu un logement (47) d'un joint torique, qui entoure l'entrée (3) de fluide et/ou la sortie (5) de fluide.

13. Dispositif d'amortissement suivant l'une des revendications précédentes, **caractérisé en ce que**, à la manière d'un bloc de fixation ayant plusieurs boulons (45) de fixation, qui entourent la partie de l'entrée (3) de fluide et/ou de la sortie (5) de fluide, l'enveloppe d'amortissement peut se fixer à des pièces tierces.
